# EUROPEAN PATENT SPECIFICATION

(11) **EP 1 046 850 B1**
(45) Date of publication and mention of the grant of the patent: **03.08.2005**
(21) Application number: 00108040.7
(22) Date of filing: 20.04.2000
(51) Int. Cl.: F16L 11/133

(54) **Marine hose**
Unterwasserschlauch
Tube flexible sous-marin

(30) Priority: 23.04.1999 JP 11684099
(43) Date of publication of application: 25.10.2000
(73) Proprietor: THE YOKOHAMA RUBBER CO., LTD., Tokyo (JP)
(72) Inventor: Yazaki, Fumihiko, The Yokohama Rubber Co., Ltd., Hiratsuka-shi, Kanagawa-ken (JP); Sugawara, Kouji, The Yokohama Rubber Co., Ltd., Hiratsuka-shi, Kanagawa-ken (JP)
(74) Representative: HOFFMANN - EITLE

(56) References cited:
- US-A- 5 714 681
- PATENT ABSTRACTS OF JAPAN vol. 1999, no. 05, 31 May 1999 (1999-05-31) & JP 11 051250 A (YOKOHAMA RUBBER CO LTD:THE), 26 February 1999 (1999-02-26)

## Description

### Background of the Invention:

The present invention relates to a marine hose used for loading and unloading fluid such as crude oil between a tank on the land and an oil tanker on the sea, more particularly to a marine hose which is designed so as to easily recognize a hose line floating on the sea even in the night.

Loading and unloading of fluid such as crude oil between a tanker on the sea and an oil tank on the land are generally performed by connecting a plurality of marine hoses formed to a predetermined length over a distance between an oil tanker and an oil tank ranging several hundred meters to several kilometers. Nevertheless, the marine hose is generally used in a state where the marine hose is floating on the sea, and hence the marine hose line must be recognized by ships navigating on the sea night and day by any marking means so that the ships can not touch and hitch the marine hose. Particularly, in the night, the surroundings of the marine hose line are pitch-dark. Moreover, the marine hose line is not always straight and may meander due to waves. As a result, it is very difficult to recognize the marine hose line.

Accordingly, a marine hose taking a structure in which a marking lamps are fitted to a flange thereof has been proposed as disclosed in Japanese Utility Model Publication No. 3-56157.

Nevertheless, the structure in which the marking lamps are fitted to the flange of the marine hose involves a problem that intervals between the marking lamps are large and it is difficult to recognize the hose line to be a line-shape.

Moreover, since the marking lamps have a structure that they protrude to the above via a pole, the marking lamps are apt to be damaged when they collide with the ships and the like. In addition, when two hose lines are provided in parallel, the hose crosses the other owing to waves and the like, and the adjacent hose may be damaged by the marking lamp.

Furthermore, since the conventional marking lamp has a complicated structure and shape, it is expensive. Since the conventional marking lamp emits light by a battery, replacement of the battery is needed at regular intervals, thus increasing maintenance costs.

According to the preamble of claim 1, JP-A-11051250 discloses a marker device for a hose line as well as a mounting structure for this marker device. The hose line, which is adapted to work in a marine surrounding and is enabled to lie on the marine's surface comprises a multi-layer hose line onto which marker devices for a visual recognition of the hose line's shape are attached. However, problems arise due to the insufficient adhesive and crack resistance properties of the protection cover.

### Summary of the Invention:

The primary object of the present invention is to provide a marine hose which enables easy recognition of a hose line floating on the sea even in the night.

Another object of the present invention is to provide a marine hose which makes it unnecessary to replace a battery with new one ore to charge it and is capable of reducing maintenance costs.

Still further another object of the present invention is to provide a marine hose which is capable of preventing a marking lamp from being damaged due to a touch to a ship and the like and a crossing of a hose body.

The marine hose of the present invention to achieve the foregoing objects has a feature in that a buoyancy material layer is buried in a hose body having a multi-layered structure, and a marking lamp is fitted to a surface of the outermost layer of the hose body.
As described above, since the marine hose of the present invention adopts the structure in which the marking lamp is fitted to the surface of the outermost layer of the hose body, a plurality of marking lamps can be fitted in the longitudinal direction of the hose, and hence the hose body can easily be recognized to be a line shape even in the night.

Furthermore, if a marking lamp which emits light by itself without any aid from others (hereinafter referred to as a self-light emission), based on energy stored in a solar cell is used, replacement and charging of a battery become unnecessary, resulting in reduction of maintenance costs.

The above-described marking lamp is fitted to the surface of the outermost layer of the hose body via a fitting member such as a supporting plate, buried inside the outermost layer. Or, alternatively, the marking lamp is fitted to the surface of the outermost layer via adhesive. Therefore, a fitting operation is simplified and the fitting member never damages other hoses.

Furthermore, a protection cover made of an elastic body is fitted to the surface of the outermost rubber layer so as to put the marking lamp therebetween, the marking lamp is sufficiently protected, and hence the marking lamp is never damaged when the hose is withdrawn to the land or when the ship touches the hose. Such protection cover is also fitted to the surface of the outermost layer by adhesive. To improve adhesive properties and crack-resistance properties of the protection cover, a curvature radius of a plane of the protection cover to be adhered to the outermost surface before adhesion to the outermost layer is set to be smaller than that of the surface of the outermost layer. Moreover, to enhance a protection effect obtained by the protection cover, the upper surface of the protection cover should be formed so as to be higher than that of the marking lamp.

Moreover, if the surface of the marking lamp is covered with a transparent resin film which is freely detached therefrom, the marking lamp can be cleaned simply by replacing the transparent resin film with new one when the surface of the marking lamp becomes dirty by droppings of birds and the like.

### Brief Description of the Drawings:

For a more complete understanding of the present invention and the advantages thereof, reference is now made to the following description taken in conjunction with the accompanying drawings, in which;
Fig. 1 is a perspective view showing a marine hose according to an embodiment of the present invention;
Fig. 2 is an enlarged plan view of a marking lamp shown in Fig. 1;
Fig. 3 is a side view taken along the line A-A of Fig. 2; and
Fig. 4 is a section view taken along the line B-B of Fig. 2.

### Detailed Description of the Preferred Embodiments:

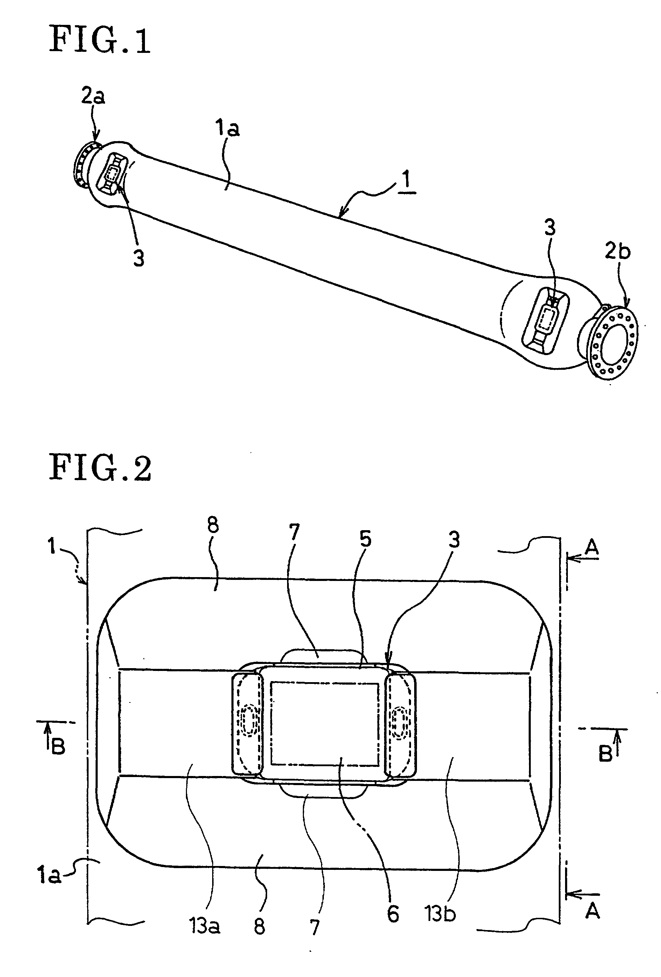

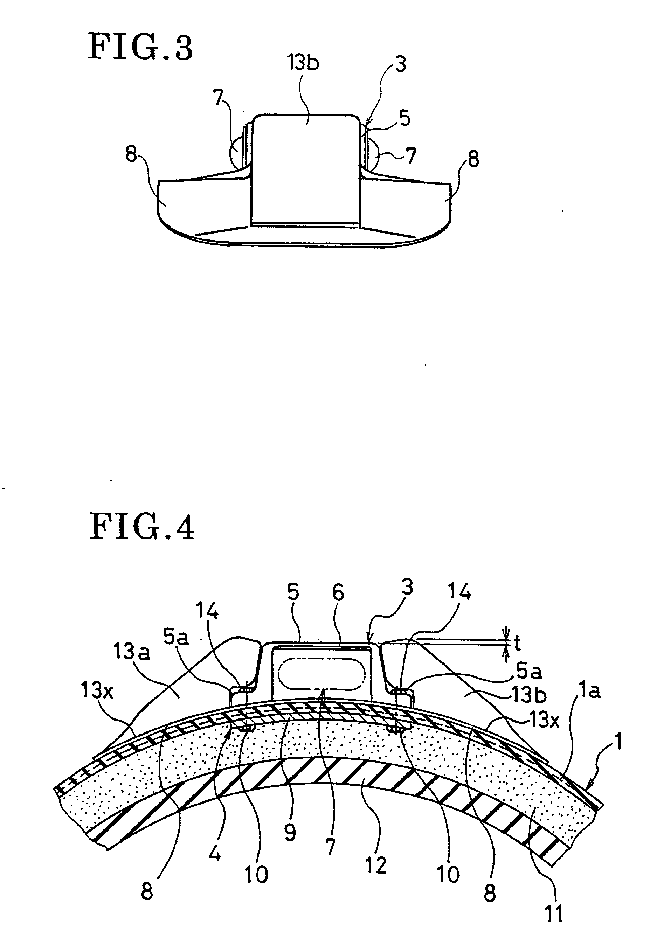

Figs. 1 to 4 show a marine hose in which the present invention is embodied. The marine hose of this embodiment has a structure in which coupling flanges 2a and 2b are integrally provided on both end portions of the tube-shaped hose body 1 having a multi-layered structure. As shown in Fig. 4, the hose body 1 has a structure in which a buoyancy material layer 11 is laminated between an outermost layer 1a and an inner tube layer 12. The outermost layer 1a can be constituted by a rubber layer having a reinforcement material buried therein. The inner tube layer 12 can be constituted by a rubber layer excellent in oil resistance. Furthermore, it is sufficient that the buoyancy material layer 11 is made of a low density substance and simply gives a buoyancy to the whole of the hose.

The marking lamp 3 is fitted to the surface of the outermost rubber layer 1a in the vicinity of the coupling flanges 2a and 2b of the hose body 1 via the fitting member 4, the marking lamp 3 being freely detachable from the surface of the outermost rubber layer 1a.

The marking lamp 3 has a structure that a solar cell 6 is accommodated inside a resin cover 5 and a pair of lights 7 are disposed the side walls of the resin cover 5. At least a portion of the resin cover 5, which corresponds to the solar cell 6 and the lights 7, is transparent. The solar cell 6 converts solar energy which is incident thereonto through the resin cover 5, to electric energy and stores the energy therein. On the other hand, the light 7 emits light by the energy stored in the solar cell 6. The marking lamp 3 comprises an optical sensor (not shown) for sensing brightness, and turns off the light 7 in the day time based on a sensing result of the optical sensor and turns on the light 7 only in the night. For this reason, the marking lamp 3 is at least capable of performing a self-light emission in the night based on energy supplied from the solar cell 6. As a matter of course, the marking lamp 3 may be always turned on based on energy supplied from the solar cell 6.

The fitting member 4 of the marking lamp 3 is constituted by a supporting plate 9 buried inside the outermost layer 1a and a fastening member 10 such as bolt and nut. In other words, the outermost layer 1a is put between a flange portion 5a of the resin cover 5, which constitutes the marking lamp 3, and the supporting plate 9 located on a rear surface of the outermost layer 1a. The flange portion 5a and the supporting plate 9 are fastened to each other by the fastening member 10.

Note that it is possible to directly fit the flange portion 5a of the resin cover 5 constituting the marking lamp 3 to the surface of the outermost layer 1a via adhesive. Moreover, the fitting member 4 may be used in combination with adhesive.

Protection covers 13a and 13b made of a rubber material are arranged on the right and left sides of the marking lamp 3. The protection covers 13a and 13b cover both sides of the resin cover 5. These protection covers 13a and 13b are fitted to the surface of the outermost layer 1a via a rubber sheet 8. The rubber sheet 8 and the protection covers 13a and 13b are combined to each other, and the rubber sheet 8 has a hole in the center portion for the marking lamp 3 to be disposed. The protection covers 13a and 13b comprise respectively a concave portion 14 which mates with the flange portion 5a, and the protection covers 13a and 13b contact tightly to both sides of the resin cover 5, respectively, thus increasing a protection effect. However, it is not necessary for the protection covers 13a and 13b to contact tightly to both sides of the resin cover 5. The upper planes of the protection covers 13a and 13b are formed so as to be positioned higher than the upper plane of the resin cover 5. The marine hose 1 is designed so that the marking lamp 3 is not damaged when the marine hose 1 is rolled on the land and even when a ship touches the hose body 1. A step difference t between the upper planes of the protection covers 13a and 13b and the upper plane of the resin cover 5 should be set to about several millimeters.

A curvature radius of the fitting planes 13x of the protection covers 13a and 13b is formed to be somewhat smaller than that of the outermost layer 1a. When the protection covers 13a and 13b are fitted to the surface of the outermost layer 1a via the adhesive materials, the fitting plane 13x of each of the protection covers 13a and 13b is adhered to the surface of the outermost layer 1a while creating a compressive strain on a non-adhered plane side of each of the protection covers 13a and 13b by widening the fitting plane 13x of each protection covers 13a and 13b toward the outer periphery of the outermost layer 1a. Thus, an adhesive strength of the fitting plane 13x to the surface of the outermost layer 1a is increased, and occurrence of ozone cracks is prevented.

The surface of the resin cover 5 sometimes becomes dirty by droppings of birds and other foreign matters. When the hose is rolled on the land, or when a ship touches the hose, the surface of the resin cover 5 is sometimes damaged. In such cases, an absorption efficiency of solar energy by the solar cell 6 may be degraded, thus reducing brightness of the light 7. Accordingly, in order to prevent this, it is possible to adhere a transparent resin film which can be repapered periodically.

In the above-described marine hose, since the marking lamp 3 is fitted to the surface of the outermost layer 1a of the hose body 1, the plurality of marking lamps 3 can be fitted thereto along the longitudinal direction of the hose so as to be arrayed on a straight line, unlike the case in which the marking lamp is fitted to a connection flange of the marine hose as conventional. Accordingly, the hose body 1 of the marine hose can be easily recognized to be a line shape even in the night.

Since the marine hose comprises the self-light emission type marking lamp 3 utilizing energy stored by the solar cell 6, replacement of batteries is unnecessary, thus reducing maintenance costs significantly.

Furthermore, the marking lamp 3 is fitted to the surface of the outermost layer 1a of the hose body 1 through the fitting member 4 composed of the supporting plate 9 and the fastening member 10. Or, alternatively, the marking lamp 3 is fitted thereto via adhesive. The fitting operation is simple, and the fitting member does not damage other marine hoses.

In addition, since the marking lamp 3 fitted to the surface of the outermost layer 1a is protected by the protection covers 13a and 13b made of an elastic body, the marking lamp 3 is not damaged when the hose is placed and rolled on the land and when a ship touches the hose.

Although the preferred embodiment of the present invention has been described in detail, it should be understood that various changes, substitutions and alternations can be made therein without departing from the scope of the invention as defined by the appended claims.

## Claims

1. A marine hose in which a buoyancy material layer (11) is buried in a hose body (1) having a multi-layered structure, comprising a marking lamp (3) fitted to a surface of an outermost layer (1a) of said hose body, wherein protection covers (13a,13b) made of an elastic body are fitted to the surface of said outermost layer with adhesive so as to put said marking lamp (3) therebetween, **characterized in that** a curvature radius of an adhered plane of each of said protection covers (13a,13b) before adhesion is set to be smaller than that of the surface of said outermost layer (1a).

2. The marine hose according to claim 1, wherein a plurality of marking lamps (3) are fitted to the surface of the outermost layer (1a) of said hose body along a longitudinal direction of said hose body (1).

3. The marine hose according to any one of claims 1 and 2, wherein said marking lamp (3) performs a self-light emission based on energy stored by a solar cell (6).

4. The marine hose according to any one of claims 1, 2 and 3, wherein said outermost layer (1a) is put between a supporting plate (2) buried inside said outermost layer and said marking lamp, and said supporting plate (9) and said marking lamp (3) are fastened to each other.

5. The marine hose according to any one of claims 1, 2, 3 and 4, wherein said marking lamp (3) is fitted to the surface of said outermost layer with adhesive.

6. The marine hose according to any one of the preceding claims, wherein an upper plane of each of said protection covers (13a,13b) is formed so as to be higher than that of said marking lamp (3).

7. The marine hose according to any one of claims 1 to 6, wherein the surface of said marking lamp (3) is covered with a transparent resin film (5) so as to be freely detachable therefrom.

## Patentansprüche

1. Seeschlauch, bei dem eine Schicht (11) aus Auftriebsmaterial in einem Schlauchkörper (1), der einen vielschichtigen Aufbau aufweist, umfassend eine Markierungslampe (3), die an einer Oberfläche einer äußersten Schicht (1a) des Schlauchkörpers befestigt ist, eingebettet ist, wobei aus einem elastischen Körper erzeugte Schutzabdeckungen (13a, 13b) an der Oberfläche dieser äußersten Schicht mit einem Klebemittel derart befestigt sind, dass die Markierungslampe (3) dazwischen eingesetzt ist, **dadurch gekennzeichnet, dass** ein Krümmungsradius einer eingebundenen Ebene jeder dieser Schutzabdeckungen (13a, 13b) vor dem Ankleben kleiner eingestellt ist, als der Krümmungsradius der Oberfläche dieser äußersten Schicht (1a).

2. Seeschlauch gemäß Anspruch 1, wobei eine Vielzahl von Markierungslampen (3) an der Oberfläche der äußersten Schicht (la) des Schlauchkörpers entlang der Längsrichtung dieses Schlauchkörpers (1) angebracht sind.

3. Seeschlauch gemäß einem der Ansprüche 1 und 2, wobei die Markierungslampe (3) basierend auf von einer Solarzelle (6) gespeicherter Energie eine Eigenlicht-Emission durchführt.

4. Seeschlauch gemäß einem der Ansprüche 1, 2 und 3, wobei die äußerste Schicht (la) zwischen einer Abstützplatte (9), die innerhalb der äußersten Schicht und der Markierungslampe eingebettet ist, eingelegt ist, und wobei diese Abstützplatte (9) und die Markierungslampe (3) aneinander befestigt sind.

5. Seeschlauch gemäß einem der Ansprüche 1, 2, 3 und 4, wobei die Markierungslampe (3) mit einem Klebstoff an der Oberfläche der äußersten Schicht angebracht ist.

6. Seeschlauch gemäß einem der voranstehenden Ansprüche, wobei eine obere Ebene jeder der Schutzabdeckungen (13a, 13b) derart ausgebildet ist, dass sie höher als die der Markierungslampe (3) ist.

7. Seeschlauch gemäß einem der Ansprüche 1 bis 6, wobei die Oberfläche der Markierungslampe (3) mit einem transparenten Harzfilm (5) derart abgedeckt ist, dass sie frei hiervon entfernbar ist.

## Revendications

1. Un tube flexible à utilisation marine dans lequel une couche de matière de flottaison (11) est noyée dans un corps de tube flexible (1) présentant une structure multicouche, comprenant une lampe de marquage (3) montée sur une surface d'une couche la plus externe (1a) dudit corps de tube flexible, où des re couvrements de protection (13a, 13b) formés d'un corps élastique sont montés sur la surface de ladite couche la plus externe à l'aide d'une substance adhésive de manière à placer ladite lampe de marquage (3) entre eux, **caractérisé en ce que** le rayon de courbure d'un plan d'adhésion de chacun desdits recouvrements de protection (13a, 13b) avant adhésion est réglé pour être plus petit que celui de la surface de la couche la plus externe (1a).

2. Le tuyau flexible à utilisation marine selon la revendication 1, dans lequel les lampes d'une pluralité de lampes de marquage (3) sont montées sur la surface de la couche la plus externe (1a) dudit corps de tube flexible le long d'une direction longitudinale dudit corps de tube flexible (1).

3. Le tube flexible à utilisation marine selon l'une quelconque des revendication 1 et 2, dans lequel ladite lampe de marquage (3) effectue une émission auto-lumineuse basée sur l'énergie stockée par une pile solaire (6).

4. Le tube flexible à utilisation marine selon l'une quelconque des revendications 1, 2 et 3, dans lequel ladite couche la plus externe (1a) est placée entre une plaque de support (9) noyée à l'intérieur de ladite couche la plus externe et ladite lampe de marquage, et dans lequel ladite plaque de support (9) et ladite lampe de marquage (3) sont fixées l'une à l'autre.

5. Le tube flexible à utilisation marine selon l'une quelconque des revendications 1, 2, 3 et 4, dans lequel ladite lampe de marquage (3) est montée sur la surface de ladite couche la plus externe à l'aide d'une substance adhésive.

6. Le tube flexible à utilisation marine selon l'une quelconque des revendications précédentes, dans lequel un plan supérieur de chacun des recouvrements de protection (13a, 13b) est formé de manière à être plus haut que celui de ladite lampe de marquage (3).

7. Le tube flexible à utilisation marine selon l'une quelconque des revendications 1 à 6, dans lequel la surface de ladite lampe de marquage (3) est recouverte d'un film de résine transparente (5) de manière à pouvoir en être librement détachée.
